# EUROPEAN PATENT APPLICATION

(11) **EP 2 886 561 A1**
(43) Date of publication of application: **24.06.2015**
(21) Application number: 14170968.3
(22) Date of filing: 03.06.2014
(51) Int. Cl.: C08F 14/06, C08F 4/80

(54) **Process for the manufacture of vinyl chloride polymers**

(30) Priority: 20.12.2013 EP 13199037
(71) Applicant: Solvay SA, 1120 Bruxelles (BE)
(72) Inventor: Hermant, Thomas, 1340 Ottignies (BE); Bodart, Vincent, 5001 NAMUR (BE)
(74) Representative: Vande Gucht, Anne

(57) **Abstract**

Process for the manufacture of a vinyl chloride polymer by polymerization of vinyl chloride and possibly of at least one comonomer of vinyl chloride, characterized in that the catalyst used for the polymerization comprises a palladium catalyst selected from palladium catalysts responding to formula I 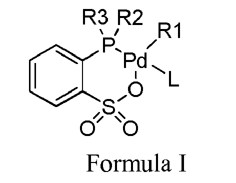 in which R1 is hydrogen, L is a weakly coordinated ligand and R2 and R3 are respectively either *tert*.-butyl and phenyl or both phenyl.

## Description

The present invention relates to a process for the manufacture of vinyl chloride polymers.

Metal-catalyzed coordination - insertion polymerization of olefins, like ethylene and propylene, is practiced on a large scale. However, coordination-insertion polymerization of polar vinyl monomers still remains a significant challenge in polymer synthesis (A. Nakamura et al., Chem. Rev., 2009, 109, 5215-5244).

With the development of late transition polymerization catalysts, significant progress in the copolymerization of polar vinyl monomers has been made, such that ethylene copolymers with acrylates, acrylonitrile, vinylacetate, vinylfluoride, allylic monomers, acrylic acid, acrylamides are now available by insertion polymerization. Even the homooligomerization of methyl acrylate has been reported.

Among the polar vinyl monomers, vinyl chloride (VC) is a particularly attractive monomer for coordination - insertion polymerization/copolymerization because polyvinyl chloride polymers (PVC) and VC copolymers are important commercial materials.

First attempts made to polymerize VC by coordination - insertion led to the conclusion that the polymerization is problematic due to the side reactions arising from the activated chlorine atom, particularly β-chloride elimination. The reason of this reactivity is not the reluctance of VC to insert into a metal-carbon bond, but the high thermodynamic propensity for β-chloride elimination after net 1,2-VC insertion to form olefin products and catalytically inactive metal-chloro complexes. While calculations using density functional theory (DFT) (Harold W. Boone, Phillip S. Athey, Michael J. Mullins, Dean Philipp, Richard Muller and William A. Goddard, J. Am. Chem. Soc., 2002, 124, 8790-8791 and Dean M. Philipp, Richard P. Muller, William A. Goddard, III, Joey Storer, Mark McAdon and Mike Mullins, J. Am. Chem. Soc., 2002, 124, 10198-10210) and experimental evidence point to an initial 2,1-insertion of VC into the metal-carbon bond, the propensity of late transition polymerization catalysts for "chain-walking" has been identified as source of the detrimental 1,2-net insertion of VC in, e.g. α-diimine palladium catalysts (Stephen R. Foley, Robert A. Stockland, Jr., Han Shen and Richard F. Jordan, J. Am. Chem. Soc., 2003, 125, 4350-4361 and Stefan M. Kilyanek, Edward J. Stoebenau, III, Nawaporn Vinayavekhin and Richard F. Jordan, Organometallics, 2010, 29, 1750-1760). A similar reactivity towards VC has been experimentally disclosed for bis(imino)pyridine- iron and cobalt complexes, for salicylaldiminato- and for phosphineenolato nickel complexes (Stephen R. Foley, Robert A. Stockland, Jr., Han Shen and Richard F. Jordan, J. Am. Chem. Soc., 2003, 125, 4350-4361).

Recently, cationic phosphine-phosphine oxide palladium catalysts have been reported to exhibit reduced ethylene polymerization activity in the presence of VC (Brad P. Carrow and Kyoko Nozaki, J. Am. Chem. Soc., 2012, 134, 8802-8805). However, ethylene homopolymer without detectable chlorine content was formed by these catalysts.

Very recently, it was however demonstrated that specific phosphine-sulfonato palladium complexes catalyze the formation of chlorinated copolymers from ethylene and VC owing to a partial suppression of chain walking after monomer insertion (Hannes Leicht, Inigo Göttker-Schnetmann and Stefan Mecking, Angew. Chem. Int. Ed., 2013, 52, 3963-3966). This was the first time that an insertion copolymerization of VC with ethylene has yielded chlorine-containing copolymers.

However, while this study led to the incorporation of VC units into a ethylene polymer chain, it did not lead to the preparation of VC polymers. It therefore remains a need to obtain such polymers.

The present invention aims to overcome the above-mentioned drawbacks by providing a process allowing the manufacture of VC polymers.

Accordingly, the present invention relates to a process for the manufacture of a vinyl chloride polymer by polymerization of vinyl chloride and possibly of at least one comonomer of vinyl chloride, characterized in that the catalyst used for the polymerization comprises a palladium catalyst selected from palladium catalysts responding to formula I 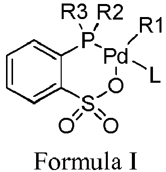 in which R1 is hydrogen, L is a weakly coordinated ligand and R2 and R3 are respectively either *tert.*-butyl and phenyl or both phenyl.

The process according to the invention is a process for the manufacture of a vinyl chloride polymer involving the use of a palladium catalyst. Advantageously, the process according to the invention is a process for the manufacture of a vinyl chloride polymer by coordination - insertion polymerization of vinyl chloride and possibly of at least one comonomer of vinyl chloride.

The expression "coordination - insertion polymerization" is understood to mean, for the purposes of the present invention, an addition polymerization in which monomer adds to a growing macromolecule through an organometallic active center. This kind of polymerization is also often simply called insertion polymerization.

The polymer manufactured by the process according to the present invention is a vinyl chloride polymer.

In the text of the present specification, the terms "polymer", "copolymer", and "homopolymer" are used indifferently in the singular as well as in the plural.

The expression "vinyl chloride polymer" is understood to mean, for the purposes of the present invention, all polymers containing advantageously at least 50 %, preferably at least 60 %, more preferably at least 70 %, most preferably at least 75 % and particularly most preferably at least 85 % by weight of monomeric units derived from vinyl chloride (monomer). These polymers are therefore advantageously either vinyl chloride homopolymers (containing 100 % by weight of units derived from vinyl chloride) or copolymers of vinyl chloride with one or more than one ethylenically unsaturated monomers (called comonomers) selected from the vinylic esters (preferably vinyl acetate) and the (meth)acrylic monomers (preferably n-butyl acrylate and methylmethacrylate). The polymer manufactured by the process according to the invention is preferably a vinyl chloride homopolymer or a copolymer of vinyl chloride with vinyl acetate and is more preferably a vinyl chloride homopolymer. The vinyl chloride polymer manufactured by the process according to the invention is advantageously not a chlorinated copolymer from ethylene and vinyl chloride, as the one obtained in Angew. Chem. Int. Ed.

The palladium catalysts used for the polymerization selected from the palladium catalysts responding to formula I as detailed here above are advantageously named hydrido (phosphinesulfonato)palladium (II) or hydridopalladium (II) complexes.

The expression "weakly coordinated ligand", is understood to mean, for the purposes of the present invention, a ligand that dissociates under polymerization conditions from the palladium catalyst to form the active species which coordinates monomer prior to the chain growth step; "weakly coordinated" specifies that dissociation of the ligand and exchange for monomer is operated during polymerization. The tendency of "weaker" is directly correlated to "less Lewis-basic".

Examples of weakly coordinated ligands are P(*tert.*-butyl)₃, pyridine, lutidine (2,6-dimethylpyridine), dimethyl sulfoxide (dmso), acetonitrile, dialkylformamides, phosphine-oxides or methanol.

Preferably, L is P(*tert.*-butyl)₃, pyridine, lutidine or dimethyl sulfoxide. More preferably, L is is P(*tert.*-butyl)₃, lutidine or dimethyl sulfoxide. Most preferably, L is P(*tert*.-butyl)₃ or dimethyl sulfoxide and particularly most preferably L is P(*tert*.-butyl)₃.

The palladium catalyst used for the polymerization is therefore most preferably selected from the palladium catalysts responding to formula I as defined above in which R1 is hydrogen, L is P(*tert*.-butyl)₃ or dimethyl sulfoxide and R2 and R3 are respectively either *tert.*-butyl and phenyl or both phenyl.

The palladium catalyst used for the polymerization is therefore particularly most preferably selected from the palladium catalysts responding to formula I as defined above in which R1 is hydrogen, L is P(*tert*.-butyl)₃ and R2 and R3 are respectively either *tert.*-butyl and phenyl or both phenyl.

According to a first variant of the process according to the present invention, the catalyst used for the polymerization comprises a palladium catalyst selected from palladium catalysts responding to formula I as defined above in which R1 is hydrogen, L is P(*tert*.-butyl)₃ or dimethyl sulfoxide and R2 and R3 are respectively *tert.*-butyl and phenyl.

Palladium catalysts according to this first variant are preferably
- (hydrido) {(*κ²-P*,*O*)-2-[*tert*.-butyl(phenyl)phosphino] benzenesulfonato} (dimethylsulfoxide) palladium(II) (2-H-dmso) and
- (hydrido) {(*κ*²-*P*,*O*)-2-[*tert*.-butyl(phenyl)phosphino] benzenesulfonato} (tri-*tert*.-butylphosphine) palladium(II) (2-H-P(*t*Bu)₃).

A more preferred palladium catalyst according to the first variant is the one responding to formula I as defined above in which R1 is hydrogen, L is P(*tert*.-butyl)₃ and R2 and R3 are respectively *tert.*-butyl and phenyl i.e. (hydrido) {(*κ*²-*P*,*O*)-2-[*tert*.-butyl(phenyl)phosphino] benzenesulfonato} (tri-*tert*.-butylphosphine) palladium(II) (2-H-P(*t*Bu)₃), represented by Formula II here below.

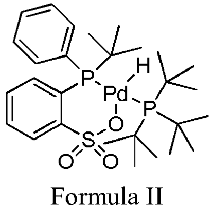

According to a second variant of the process according to the present invention, the catalyst used for the polymerization comprises a palladium catalyst selected from palladium catalysts responding to formula I as defined above in which R1 is hydrogen, L is P(*tert*.-butyl)₃ or dimethyl sulfoxide and R2 and R3 are both phenyl.

Palladium catalysts according to this second variant are preferably
- (hydrido) [(*κ*²-*P*,*O*)-2-(diphenylphosphino) benzenesulfonato] (dimethylsulfoxide) palladium(II) (6-H-dmso); and
- (hydrido) [(*κ*²-*P*,*O*)-2-(diphenylphosphino) benzenesulfonato] (tri*-tert*.-butylphosphine) palladium(II) (6-H-P(*t*Bu)₃).

A more preferred palladium catalyst according to the second variant is the one responding to formula I as defined above in which R1 is hydrogen, L is P(*tert*.-butyl)₃ and R2 and R3 are both phenyl i.e. (hydrido) [(*κ*²-*P*,*O*)-2-(diphenylphosphino) benzenesulfonato] (tri-*tert*.-butylphosphine) palladium(II) (6-H-P(*t*Bu)₃) represented by Formula III here below.

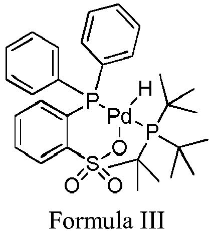

Complementary to the palladium catalyst, the catalyst used for the polymerization advantageously may comprise further a cocatalyst, advantageously selected from triphenylphosphine oxide (OPPh₃), sodium hexafluorosilicate (Na₂SiF₆), sodium tetrafluoroborate (NaBF₄), potassium hexafluorophosphate (KPF₆), polymethylhydrosiloxane (PMHS) and tetrabultylammonium tetrafluoroborate (Bu₄NBF₄).

According to a first embodiment of the first variant of the process according to the present invention, the catalyst used for the polymerization preferably consists of a palladium catalyst selected from palladium catalysts responding to formula I as defined above for the first variant, and particularly the more preferred palladium catalyst as defined above.

According to a second embodiment of the first variant of the process according to the present invention, the catalyst used for the polymerization preferably comprises a palladium catalyst selected from palladium catalysts responding to formula I as defined above for this first variant, and particularly the more preferred palladium catalyst as defined above, and a cocatalyst, advantageously selected from OPPh₃, Na₂SiF₆, NaBF₄, KPF₆, PMHS and Bu₄NBF₄, preferably selected from OPPh₃, Na₂SiF₆, NaBF₄ and KPF₆.

The second embodiment of the first variant of the process according to the invention is preferred over the first embodiment of the first variant of the process according to the invention.

According to a first embodiment of the second variant of the process according to the present invention, the catalyst used for the polymerization preferably consists of a palladium catalyst selected from palladium catalysts responding to formula I as defined above for the second variant, and particularly the more preferred palladium catalyst as defined above.

According to a second embodiment of the second variant of the process according to the invention, the catalyst used for the polymerization preferably comprises a palladium catalyst selected from palladium catalysts responding to formula I as defined above for this second variant, and particularly the more preferred palladium catalyst as defined above, and a cocatalyst, advantageously selected from OPPh₃, Na₂SiF₆, NaBF₄, KPF₆, PMHS and Bu₄NBF₄, preferably which is OPPh₃.

The polymerization takes place at a temperature advantageously of at least - 75, preferably of at least -50, more preferably of at least -25, particularly more preferably of at least 5, most preferably of at least 20 and particularly most preferably of at least 40°C.

The polymerization takes place at a temperature advantageously of at most 110, preferably of at most 100, more preferably of at most 90, particularly more preferably of at most 80, most preferably of at most 70 and particularly most preferably of at most 60°C.

Good results can be obtained when the polymerization takes place at a temperature comprised between 5 and 90°C. Very good results can be obtained when the polymerization takes place at temperature comprised between 20 and 80°C.

The ratio of the number of moles of VC and possibly of the at least one comonomer of vinyl chloride, to the number of moles of palladium catalyst (i.e. n_{VC}:n_{cat}), advantageously at the beginning of the polymerization, is comprised advantageously between 100 and 10 000 000, preferably between 100 and 1 000 000, more preferably between 100 and 500 000, particularly more preferably between 100 and 100 000, most preferably between 100 and 50 000 and particularly most preferably between 100 and 25 000. Good results can be obtained when such ratio is comprised between 100 and 10 000. Very good results can be obtained when such ratio is comprised between 100 and 4000.

The process according to the invention can be a batch process or a continuous process. Preferably, the process according to the invention is a batch process.

The following examples are intended to illustrate the invention without however limiting the scope thereof.

### Catalysts

The palladium catalysts used were 2-H-P(*t*Bu)₃i.e. (hydrido) {(*κ*²-*P*,*O*)-2-[*tert*.-butyl(phenyl)phosphino] benzenesulfonato} (tri-*tert*.-butylphosphine) palladium(II); and 6-H-P(*t*Bu)₃ i.e. (hydrido) [(*κ²*-*P*,*O*)-2-(diphenylphosphino) benzenesulfonato] (tri-*tert*.-butylphosphine) palladium(II).

The synthesis of 2-H-P(*t*Bu)₃ is described here after.

[Pd(*tert*.Bu₃P)₂] (1.022 g, 2 mmol, 1 eq.) and 2-[*tert*.-butyl(phenyl)phosphonium] benzenesulfonate (0.676 g, 2.1 mmol, 1.05 eq) were suspended in benzene (150 mL). The suspension was heated to 60°C and stirred for two to three hours until a clear solution was formed. The reaction mixture was filtered via a syringe filter and benzene was removed by sublimation. The obtained solid was washed three times with pentane (3 x 50 mL) to yield 2-H-P(*t*Bu)₃ (1.20 g, 1.9 mmol, 93 %) after drying in vacuo.

The synthesis of 6-H-P(*t*Bu)₃ is described here after.

[Pd(*tert*.Bu₃P)₂] (1.022 g, 2 mmol) and 2-[diphenylphosphonium] benzenesulfonate (0.718 g, 2.1 mmol, 1.05 eq) were suspended in benzene (150 mL). The suspension was heated to 60 °C and stirred for two to three hours until a clear solution formed. The reaction mixture was filtered via a syringe filter and benzene was removed by sublimation. The obtained solid was washed three times with pentane (3 x 50 mL) to yield 6-H-P(*t*Bu)₃ (1.237 g, 1.9 mmol, 93 %) after drying in vacuo.

### Other materials

Vinyl chloride supplied by SOLVAY S.A.

Tetrahydrofuran (THF) absolute, over molecular sieve (H₂O ≤0.005 %), containing -0.025 % 2,6-di-*tert*.-butyl-4-methylphenol as stabilizer, ≥99.5 % (GC) supplied by Sigma-Aldrich.

### General procedure for the polymerization

Polymerization was performed in a stainless steel autoclave equipped with a probe for temperature and pressure. The temperature was regulated thanks to a thermostat bath. The autoclave was opened and 50 ml of THF previously degassed under nitrogen flow for 1 hour at ambient temperature were introduced into the autoclave. The palladium catalyst and possibly the cocatalyst were introduced in the autoclave. The autoclave was tightly closed and the reaction mixture was placed under nitrogen flux during 5 minutes under gentle agitation (< 100 rpm). Nitrogen flux was then stopped and VC (10 g, 0.154 mol) was introduced at room temperature. The exact amount of VC was determined by weighting the storage cylinder before and after the polymerization. The mixture was then stirred with 300 rpm and the autoclave was warmed to 50°C. After 24 hours, the autoclave was brought to room temperature. The VC was vented slowly and the autoclave was purged with nitrogen with a cannula for at least 1 hour. Methanol (1 g, 0.031 mol) was then introduced in the autoclave and the mixture was transferred into a 250 ml round-bottom flask. The solvent was removed in vacuo to yield a crude product which was solubilised in 5 ml THF and suspended in 20 ml methanol leading to the formation of a precipitate which was then filtered off. The precipitate was then dried in vacuum at 25°C and weighted. When no precipitate was obtained, the filtrate was recovered, the solvent was removed thereof in vacuo and a residual product was obtained.

### Characterization of the obtained products by ¹H NMR and ¹³C NMR

The products obtained at the issue of the polymerization (the precipitate or the residual product) were characterized by ¹H NMR on a Bruker AVANCE 500 MHz spectrometer (sample dissolved in deuterated THF, 30°C) and by ¹³C NMR on a Bruker AVANCE 400 MHz (sample dissolved in deuterated dioxane, 50°C).

### Examples 1 to 12 (according to the invention) and examples 13 (C) to 15 (C) (comparative examples)

Examples 1 to 12 and 13(C) to 15(C) were performed according to the general procedure for the polymerization detailed above.

All the conditions and results are summarized in Table 1 below.

n_{VC}:n_{cat} is the ratio of the number of moles of VC to the number of moles of palladium catalyst at the beginning of the polymerization.

TON is the turnover number i.e. the ratio of the number of moles of monomer in polymer to the number of moles of palladium catalyst.

**Table 1**

| Example | Catalyst | Cocatalyst | T (°C) | Amount catalyst [mmol] | Amount cocatalyst [mmol] | VC [mmol] | n_{VC}:n_{cat} | Weight of precipitate [mg] | TON |
|---|---|---|---|---|---|---|---|---|---|
| 1 | 2-H-P(*t*Bu)₃ | - | 50 | 0,16 | - | 154 | 962 | * | < 0.5 |
| 2 | 2-H-P(*t*Bu)₃ | OPPh₃ | 50 | 0,16 | 0,16 | 154 | 962 | 50 | 5 |
| 3 | 2-H-P(*t*Bu)₃ | Na₂SiF₆ | 50 | 0,16 | 0,16 | 154 | 962 | 50 | 5 |
| 4 | 2-H-P(*t*Bu)₃ | NaBF₄ | 50 | 0,04 | 0,12 | 154 | 3850 | 200 | 80 |
| 5 | 2-H-P(*t*Bu)₃ | KPF₆ | 50 | 0,04 | 0,12 | 154 | 3850 | 200 | 80 |
| 6 | 2-H-P(*t*Bu)₃ | PMHS | 50 | 0,04 | 0,12 | 154 | 3850 | * | < 0.5 |
| 7 | 2-H-P(*t*Bu)₃ | Bu₄NBF₄ | 50 | 0,04 | 0,12 | 154 | 3850 | * | < 0.5 |
| 8 | 6-H-P(*t*Bu)₃ | - | 50 | 0,32 | - | 154 | 481 | 83 | 4,15 |
| 9 | 6-H-P(*t*Bu)₃ | OPPh₃ | 50 | 0,32 | 0,32 | 154 | 481 | 80 | 4 |
| 10 | 6-H-P(*t*Bu)₃ | OPPh₃ | 50 | 0.21 | 0.42 | 154 | 733 | 16 | 1,22 |
| 11 | 6-H-P(*t*Bu)₃ | OPPh₃ | 50 | 0.21 | 0.62 | 154 | 733 | 7 | 0,53 |
| 12 | 6-H-P(*t*Bu)₃ | OPPh₃ | 50 | 0.21 | 0.83 | 154 | 733 | 6 | 0,46 |
| 13(C) | - | - | 50 | 0 | 0 | 154 | - | ** | - |
| 14(C) | - | OPPh₃ | 50 | 0 | 0,64 | 154 | - | ** | - |

| | | | | | | | | | |
|---|---|---|---|---|---|---|---|---|---|
| * : no precipitate was obtained but PVC was detected in the obtained residual product. ** : no polymer (PVC) was obtained | | | | | | | | | |

In examples 1-12, PVC was obtained. Indeed, the characterization of the product obtained in each of examples 1-12 by ¹H NMR identified the signals which are characteristic of PVC i.e. the signal between 2 and 2.7 ppm for the -CHCl-C*H*₂- group and the one between 4.3 and 4.8 ppm for the -C*H*Cl-CH₂-group. Similarly, the characterization of the product obtained in each of examples 1-12 by ¹³C NMR identified the signal which is characteristic of PVC i.e. the one at about 56 ppm for the -CHCl- group. The obtained polymers are therefore PVC without any doubt.

In examples 13(C) and 14(C), no polymer (PVC) was obtained.

## Claims

1. Process for the manufacture of a vinyl chloride polymer by polymerization of vinyl chloride and possibly of at least one comonomer of vinyl chloride, **characterized in that** the catalyst used for the polymerization comprises a palladium catalyst selected from palladium catalysts responding to formula I 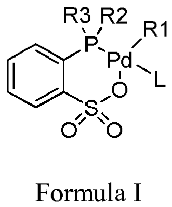 in which R1 is hydrogen, L is a weakly coordinated ligand and R2 and R3 are respectively either *tert.*-butyl and phenyl or both phenyl.

2. Process according to Claim 1, wherein L is P(*tert*.-butyl)₃ or dimethyl sulfoxide.

3. Process according to either Claim 1 or 2, wherein L is P(*tert*.-butyl)₃.

4. Process according to Claim 3, wherein R2 and R3 are respectively *tert.*-butyl and phenyl.

5. Process according to Claim 4, **characterized in that** the catalyst used for the polymerization consists of a palladium catalyst selected from palladium catalysts responding to formula I.

6. Process according to Claim 4, **characterized in that** the catalyst used for the polymerization comprises a palladium catalyst selected from palladium catalysts responding to formula I and a cocatalyst selected from OPPh₃, Na₂SiF₆, NaBF₄, KPF₆, PMHS and Bu₄NBF₄,

7. Process according to Claim 3, **characterized in that** R2 and R3 are both phenyl.

8. Process according to Claim 7, **characterized in that** the catalyst used for the polymerization consists of a palladium catalyst selected from palladium catalysts responding to formula I.

9. Process according to Claim 7, **characterized in that** the catalyst used for the polymerization comprises a palladium catalyst selected from palladium catalysts responding to formula I and a cocatalyst which is OPPh₃.

10. Process according to any one of Claims 1 to 9, **characterized in that** it is a process for the manufacture of a vinyl chloride polymer by coordination - insertion polymerization.

11. Process according to any one of Claims 1 to 10 wherein the vinyl chloride polymer is either a vinyl chloride homopolymer or a copolymer of vinyl chloride with one or more than one ethylenically unsaturated monomers selected from the vinylic esters and the (meth) acrylic monomers.

12. Process according to any one of Claims 1 to 11, wherein the vinyl chloride polymer is a vinyl chloride homopolymer or a copolymer of vinyl chloride with vinyl acetate.

13. Process according to any one of Claims 1 to 11, wherein the vinyl chloride polymer is a vinyl chloride homopolymer.
